# EUROPEAN PATENT APPLICATION

(11) **EP 4 057 256 A1**
(43) Date of publication of application: **14.09.2022**
(21) Application number: 22156677.1
(22) Date of filing: 15.02.2022
(51) Int. Cl.: G08G 5/00

(54) **COMPUTER-IMPLEMENTED METHODS FOR CONTROLLING THE OPERATION OF ELECTRIC AND HYBRID ELECTRIC AIRCRAFT**

(30) Priority: 10.03.2021 GB 202103280
(71) Applicant: Rolls-Royce plc, London N1 9FX (GB)
(72) Inventor: Bacic, Marko, Derby, DE24 8BJ (GB); Beecroft, Peter, Derby, DE24 8BJ (GB)
(74) Representative: Rolls-Royce plc

(57) **Abstract**

Computer-implemented methods 40, 50, 60, 70 for controlling the operation of aircraft 100, particularly electric or hybrid electric aircraft, are described. One such method 60, implemented on a Flight Management System, FMS 110, of an aircraft 100, comprises: receiving 61, by the FMS 110, weather data indicative of weather conditions around the aircraft; and selecting 63, by the FMS 110, based on the received weather data, one of a plurality of different pre-defined FMS profiles 112a-c, each FMS profile 112a-c corresponding to a different range of weather conditions and defining a different set of aircraft operating parameters. The aircraft 100 may be flown under the control of the FMS 110 using the selected FMS profile 112a-c.

## Description

### TECHNICAL FIELD

This disclosure concerns computer-implemented methods for controlling the operation of aircraft, particularly but not exclusively VTOL and STOL aircraft with electric or hybrid electric propulsion systems powered at least partially by batteries or fuel cells.

### BACKGROUND

Aircraft are conventionally powered by internal combustion engines, for example reciprocating engines or gas turbine engines, which combust carbon-based fuels such as kerosene. More recently, however, there has been an increased focus on alternative propulsion systems that can facilitate reduced aircraft emissions. Hybrid electric aircraft powered by a combination of internal combustion engines, electrical machines and electrical power sources have been proposed, as have purely electric aircraft and aircraft powered by internal combustion engines that combust carbonless fuels such as hydrogen.

The use of alternative propulsion systems creates challenges. Some of these challenges arise because batteries and alternative fuels such as hydrogen have relatively low energy storage densities, at least compared to conventional fuels such as kerosene. An aircraft can only carry a limited volume and weight of batteries or other fuel, so the reduced energy density limits the performance and/or range of the aircraft.

It is hoped that advances in the underlying energy storage technologies will, over time, allow for increased performance and range. At least until then, it will be desirable to improve the efficiency and effectiveness with which the available stored energy is used and managed so that aircraft range and performance can be improved.

Furthermore, it is expected that some of the early applications of these aircraft, particularly for battery or fuel-cell powered electric and hybrid electric aircraft, will be Urban Air Mobility (UAM) applications. UAM platforms, sometimes called air taxis, may be required to fly routes of varying time and length. It would be desirable to be increase the performance of UAM platforms and/or increase the time and length of the routes that UAM platforms can fly.

United States Patent Application Publication US 2019/005826 A1 relates to engine load models. A model generator generate an engine load model using flight information, weather information and manifest information to predict a load on the engine from an engine subsystem utilization modelled for a flight.

United States Patent Publication US 10388170 B2 relates to the management of speed-constrained aircraft operations.

United States Patent Application Publication US 2016/019796 A1 relates to a system and method for providing in-flight weather information to compute an optimized vertical flight profile.

The paper "Contingency Path Planning for Hybrid-electric UAS" by Anthony Reinier Hovenburg et al, IEEE 2017 Workshop on Research, Education, Development of Unmanned Aerial System (XP033249202) describes a path planning optimization method to mitigate the risks in the event of a critical engine or generator failure in an a hybrid-electric unmanned aerial system.

### SUMMARY

Systems and methods disclosed herein take into account the effect of weather conditions on the power draw of an aircraft's systems, particularly but not exclusively the power draw of the aircraft's Environmental Control System (ECS). In this way, the energy requirements of an aircraft's systems can be more accurately assessed, which may facilitate, amongst other things, a reduction in the energy that must be held in reserve for safety and certification reasons. This may in turn facilitate increased range and/or performance of an energy-constrained aircraft such as an electric and hybrid electric aircraft.

According to a first aspect, there is provided a computer-implemented method for determining a flight path for flying an electric or hybrid electric aircraft from an origin to a destination. The method comprises: obtaining flight path data for the aircraft, the flight path defining a three-dimensional path from an origin to a destination; receiving weather data indicative of weather conditions along the flight path; and determining an amount of energy required to fly the aircraft along the flight path. The determination uses an aircraft energy usage model whose inputs include the flight path data and the weather data.

The determined amount of energy may include a weather data dependent amount of energy that is required by an ECS of the aircraft to maintain environmental conditions within a cabin of the aircraft within a pre-defined range of conditions as the aircraft flies along the flight path.

The weather data may comprise data indicative of ambient temperature. The inputs of the aircraft energy usage model may include the data indicative of ambient temperature and a pre-defined temperature or temperature range at or in which the ECS must maintain the cabin of the aircraft.

The determined amount of energy may include a weather data dependent amount of energy required by a propulsion system and/or dynamic control system of the aircraft to propel and/or manoeuvre the aircraft along the flight path. The determined amount of energy may include a weather data dependent amount of energy required by a propulsion system and/or dynamic control system of the aircraft to perform one or more take-off or landing manoeuvres. The weather data may comprise data indicative of one or more of a wind speed, a wind direction, a wind gust variance and a degree of turbulence along the flight path.

The method may further comprise determining whether the determined amount of energy is greater than or less than an amount of stored energy available to the aircraft for the flight. The determination may involve comparing the determined amount of energy with a determined or pre-defined amount of stored energy.

The method may further comprise, responsive to determining that the determined amount of energy is less than the amount of stored energy available to the aircraft for the flight, validating the flight path. The flight path may then be flown by the aircraft, for example using an autopilot system of the aircraft.

The method may further comprise, responsive to determining that the determined amount of energy is greater than the amount of stored energy available to the aircraft for the flight, rejecting the flight path. The method may further comprise obtaining, for example receiving or determining, a new flight path for flying the electric or hybrid electric aircraft from the origin to the destination. The new flight path may be determined as provided in the third aspect.

According to a second aspect, there is provided a computer-implemented method for controlling the operation of an electric or hybrid electric aircraft. The method comprises: receiving weather data indicative of weather conditions around the aircraft; and determining, based on the received weather data and an aircraft energy usage model whose inputs include the weather data, an amount of electrical power required by an Environmental Control System, ECS, of the aircraft to maintain environmental conditions within a cabin of the aircraft within a pre-defined range of conditions.

The method may further comprise selecting or modifying one or more operating parameters of a propulsion system of the aircraft based at least in part on the determined amount of electrical power required by the ECS.

According to a third aspect, there is provided a computer-implemented method for determining a flight path for flying an electric or hybrid electric aircraft from an origin to a destination. The method comprises: receiving weather data indicative of weather conditions between a flight origin and a flight destination of the aircraft; and determining, using a constrained optimization method and a weather data dependent aircraft energy usage model, a three-dimensional flight path from the origin to the destination.

The constrained optimization method may minimize a total amount of energy required to fly the aircraft from the origin to the destination.

The constrained optimization method may be a non-linear constrained optimization method. The method may be an interior-point method.

The method may further comprise, prior to the determining the flight path, determining an amount of stored energy available to the aircraft for flying from the origin to the destination. The determined amount of stored energy available to the aircraft for flying from the origin to the destination may be used as a constraint in the constrained optimization method.

An output of the aircraft energy usage model may include a weather data dependent estimate of an amount of energy used by the ECS. An operating condition or range of operating conditions of the ECS may be used as a constraint in the constrained optimization method.

The weather data may comprise data indicative of ambient temperature. A pre-defined temperature or temperature range at or in which the ECS must maintain the cabin of the aircraft may be used as a constraint in the constrained optimization method.

An output of the aircraft energy usage model may include a weather data dependent estimate of an amount of energy used by a propulsion system and/or dynamic control system as the aircraft flies along the flight path. An output of the aircraft energy usage model may include a weather data dependent amount of energy required by the propulsion system and/or dynamic control system of the aircraft for performing one or more take-off or landing manoeuvres. The weather data may comprise data indicative of one or more of a wind speed, a wind direction and/or a degree of turbulence.

Data defining a flight corridor may be used as a constraint in the constrained optimization method.

According to a fourth aspect, there is provided a computer-implemented method for controlling an electric or hybrid electric aircraft. The method comprises: receiving, by a Flight Management System, FMS, of the aircraft, weather data indicative of weather conditions around the aircraft; and selecting, by the FMS, based on the received weather data, one of a plurality of different pre-defined FMS profiles. Each FMS profile corresponds to a different range of weather conditions and defines a different set of aircraft operating parameters.

The FMS profiles may be stored in memory accessible by the FMS.

The aircraft operating parameters of the FMS profiles may include one or more of a maximum flight distance, a maximum flight time or a maximum flight energy consumption. The aircraft operating parameters of the FMS profiles may include one or more of a maximum flight speed or a maximum rate of energy consumption of a propulsion system of the aircraft. The aircraft operating parameters of the FMS profiles may include one or more operating parameters of a cooling system for cooling one or more components of the propulsion system of the aircraft.

Each FMS profile may define a power consumption or allowable range of power consumptions for the ECS, or an operating condition (e.g. a target cabin temperature) for the ECS.

One or more of the aircraft operating parameters defined by the selected FMS profile may be used as a constraint of a constrained optimization method in a method according to the third aspect.

The method may further comprise: receiving a flight destination; and determining, based on the flight destination and the selected FMS profile, whether or not the aircraft can fly to the destination.

The method may further comprise: determining an estimated distance or flight time between a current location of the aircraft and a destination. Determining whether or not the aircraft can fly to the destination may be based on the selected FMS profile and the estimated distance or flight time.

The method may further comprise: determining an amount of stored energy available to the aircraft for flying to a destination. Selecting the FMS profile may be based on the received weather data and on the determined amount of stored energy available to the aircraft.

The method may further comprise flying the aircraft under control of the FMS using the selected FMS profile.

According to a fifth aspect, there is provided a computer-implemented method for controlling an electric or hybrid electric aircraft. The method comprises: receiving weather data indicative of weather conditions around the aircraft; and selecting or modifying one or more operating parameters of a propulsion system of the aircraft and one or more operating parameters of an ECS of the aircraft based at least in part on the received weather data.

According to a sixth aspect, there is provided an electric or hybrid electric aircraft comprising an electric or hybrid electric propulsion system; and a computer system. The computer system is, or is part of, a computer system configured to perform a method according to any one of the first, second, third, fourth or fifth aspects. The computer system of the aircraft may be a Flight Management System (FMS) of the aircraft.

According to a seventh aspect, there is provided a computer program comprising code which, when executed by a computer system, causes the computer system to perform a method according to any one of the first, second, third, fourth or fifth aspects. The computer system may be an FMS of the aircraft.

According to an eighth aspect, there is provided a non-transitory computer-readable medium having program code stored thereon which, when executed by a computer system, causes the computer system to perform a method according to any one of the first, second, third, fourth or fifth aspects. The non-transitory computer readable medium may be of any suitable type known in the art. Examples include but are not limited to ROM, RAM, a hard disk, a solid-state drive, flash memory and an optical storage device.

The following features may be used singularly or in combination with each other and with any of the first, second, third, fourth, fifth, sixth seventh or eighth aspects.

The aircraft may comprise a computer system, for example a controller. The computer system may perform, or may be part of a wider computer system which performs, the above methods or executes the above program code. The computer system may include one or more other computers, for example a multi-aircraft management system such as an Air Traffic Management (ATM) system. The computer system may be or may comprise a Flight Management System (FMS) of the aircraft.

The computer system may be implemented in hardware, software or a combination of the two. The computer system may for example comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

The computer system, for example the FMS, may also comprise an autopilot system configured to fly the aircraft using flight paths and operating parameters determined or selected as provided herein.

The aircraft may comprise an ECS for controlling environmental conditions within a cabin of the aircraft. The ECS may control the amount of power delivered to components such as a cabin heater or a cabin air conditioning system.

The aircraft may comprise a dynamic control system for controlling the orientation of the aircraft and/or manoeuvring the aircraft. The dynamic control system may be or may be part of the propulsion system.

The aircraft may be of the VTOL type. The aircraft may also be of the STOL type.

A flight origin and/or destination may be an airport, an airfield, a helipad or vertiport.

During flight, the computer system (e.g. the FMS) may modify one or more aircraft operating parameters (e.g. propulsion system parameters or ECS parameters) based on weather data received during the flight.

The electric or hybrid electric propulsion system of the aircraft may comprise batteries or fuel cells, for example hydrogen fuel cells.

The weather data may be received from one or more of: sensors, for example temperature or humidity sensors, of the aircraft; a weather radar system of the aircraft; an Air Traffic Management, ATM, system; one or more aircraft in direct or indirect communication with the electric or hybrid electric aircraft; and a weather satellite.

The weather data may include data indicative of one or more of ambient temperature, ambient humidity, wind speed, wind direction, wind gust variance about a mean wind speed, or a level or degree of turbulence.

The amount of stored energy available to the aircraft for a flight may be equal to a total amount of stored energy available to the aircraft less a reserve amount of energy. The amount of stored energy may be the sum of all types of available stored energy. In a hybrid electric aircraft, the stored energy may include the recoverable energy stored in combustible fuel and the recoverable energy stored in energy storage devices such as batteries and/or fuel cells. Determining the amount of stored energy available to the aircraft may comprise determining a state of charge of one or more batteries of the aircraft and/or determining an amount of fuel in the aircraft.

An aircraft energy usage model may comprise multiple sub-models, each of which model the energy usage of one or more different aircraft systems. For example, the energy usage model may include a first model which estimates an amount of energy used by a propulsion system when flying along a flight path, a second model which estimates the amount of energy used by an ECS, and a third model which estimates the amount of energy used by a dynamic control system to manoeuvre and control the orientation of the aircraft. In some embodiments the first and third models may be the same model. One or more of the models may be weather data dependent. The aircraft energy usage model may be or may be part of a digital twin of the aircraft.

A flight path may comprise three-dimensional aircraft position data (*x, y, z*)*.* It may also comprise: three-dimensional aircraft velocity data (*u, v, w*); three-dimensional aircraft orientation data (*θ, ϕ, ψ*); and/or rates of change of orientation (*p*, *q, r*)*.* Each variable of the flight path may be a time series, for example each value of each variable (e.g. *xᵢ, yᵢ, zᵢ, uᵢ, vᵢ, wᵢ, pᵢ, qᵢ, rᵢ, θᵢ, ϕᵢ, ψᵢ*) may be associated with an i-th time instant *tᵢ.*

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1A** is a schematic illustration of an electric aircraft propulsion system;
**Figure 1B** is a schematic illustration of a hybrid electric aircraft propulsion system;
**Figure 2** is a schematic illustration of an aircraft and its flight management system communicating with other aircraft and non-aircraft systems;
**Figure 3** is a flow diagram illustrating a computer-implemented method of validating a flight path of an aircraft in accordance with an aspect of the present disclosure;
**Figure 4** is a flow diagram illustrating a computer-implemented method of determining a flight path of an aircraft in accordance with an aspect of the present disclosure;
**Figure 5** is a flow diagram illustrating a computer-implemented method of controlling an aircraft in accordance with an aspect of the present disclosure;
**Figure 6** is a flow diagram illustrating a computer-implemented method of controlling an aircraft in accordance with an aspect of the present disclosure;
**Figure 7** is a schematic illustration of an aircraft digital twin which may be used in accordance with aspects of the present disclosure; and
**Figure 8** illustrates flight paths between a flight origin and a flight destination constrained by a flight corridor.

### Detailed Description

### Figure 1A

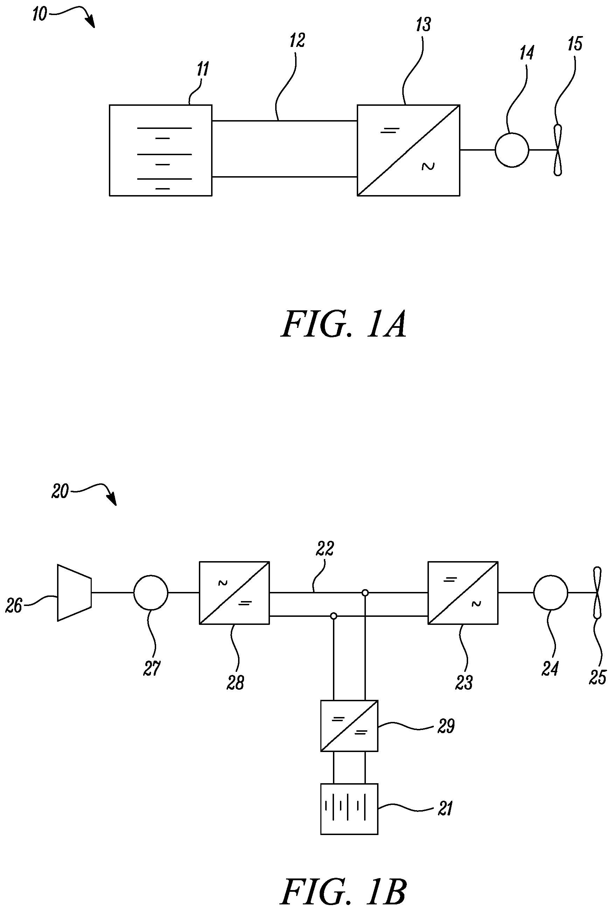

Figure 1A illustrates an exemplary electric propulsion system 10 for an electric aircraft. Alternative electric propulsion system arrangements are known and will occur to those skilled in the art.

The electric propulsion system 10 includes an energy storage device 11, which in this embodiment is a battery pack but could also take the form of stored fuel (e.g. hydrogen) and one or more associated fuel cells, or a combination of battery packs and fuel and associated fuel cells. The battery pack 11 feeds a DC electrical distribution bus 12, possibly via a DC/DC converter (not shown). The DC distribution bus delivers power to one or more electrical motors 14 via corresponding DC/AC converters 13. The motors 14 drive propulsors 15, for example propellers, ducted fans or the like, which propel the electric aircraft.

A variety of electric propulsion systems arrangements have been proposed, particularly in the context of UAM where it is expected that Vertical Take-off and Landing (VTOL) or Short Take-off and Landing (STOL) platforms will be required. In the case of VTOL aircraft, the propulsion system must allow for vertical take-off and landing as well as horizontal flight. Some VTOL and STOL propulsion systems are helicopter-like arrangements, whereas others include separate propulsors for take-off/landing and horizontal flight or tiltrotor propulsors whose orientation can be changed to accommodate different flight stages. The inventions described herein are not limited to any particular propulsion system arrangement and may be used in any aircraft with an electric propulsion system.

### Figure 1B

Figure 1B illustrates an exemplary propulsion system 20 of a hybrid electric aircraft. Alternative hybrid electric propulsion system arrangements are known and will occur to those skilled in the art.

The propulsion system 20 includes an engine 26, for example a gas turbine engine or another type of internal combustion engine, and an energy storage device 21. Both the engine 26 and the energy storage device 21 are used as energy sources to power motor-driven propulsors 25, as well as ancillary electrical systems (not shown). The propulsion system 20 of the hybrid electric aircraft will typically further comprise a generator 27, an AC/DC converter 28, a DC distribution bus 22, DC/AC converters 23, motors 24 that drive the propulsors 25, and a DC/DC converter 29.

A shaft or spool of the engine 26 is coupled to and drives the rotation of a shaft of the generator 27 which thereby produces alternating current. The AC/DC converter 28, which faces the generator 27, converts the alternating current into direct current which is fed to various electrical systems via the DC distribution bus 22. These electrical systems include the motors 24 that drive the propulsors 25. The motors 24 interface with the DC distribution bus 22 via the DC/AC converters 23.

In this embodiment, the energy storage device 21 is a battery pack made up of a number of battery modules connected in series and/or parallel. However the energy storage device 21 could also be made up of stored fuel and associated fuel cells, or a combination of batteries and fuel and associated fuel cells. The battery pack 21 is connected to the DC distribution bus 22 via the DC/DC converter 29. The DC/DC converter 29 converts between a voltage of the battery pack 21 and a voltage of the DC distribution bus 22. In this way, the battery pack 21 can replace or supplement the power provided by the engine 26 (by discharging and thereby feeding the DC distribution bus 22) or can be charged using the power provided by the engine 26 (by being fed by the DC distribution bus 22).

A variety of hybrid electric propulsion system architectures have been proposed, including series-hybrid architectures (such as the one shown in Figure 1B), parallel-hybrid architectures, turboelectric architectures and mixed architectures. As with the electric aircraft described above, the propulsors may be arranged in many ways and in some cases may be arranged to provide VTOL or STOL capabilities. The inventions described herein are not limited to any particular propulsion system architecture or arrangement and may be used in any aircraft with a hybrid electric propulsion system.

Now referring to both Figures 1A and 1B, aircraft with electric or hybrid electric propulsion systems 10, 20 may be energy constrained due to the relatively low energy storage densities of batteries and fuel cells. In other words, the total amount of stored energy available to an electric or hybrid electric aircraft's systems may be limited to the point that the aircraft's capabilities - particularly its range and speed - are meaningfully limited. In hybrid aircraft, the degree of the constraint will depend to some extent on the proportion of the total stored energy taken up by combustible fuel; the greater the amount of combustible fuel, the less energy constrained the system will be. However, many applications, particularly UAM applications, will demand low emissions and low noise and this may require that combustible fuel accounts for a relatively low proportion of the total stored energy.

The systems and methods described herein may offer improvements in terms of aircraft range and performance by taking into account the effect of weather conditions on the power draw of an aircraft's systems. In this way, the range and performance of the aircraft can be maximised without compromising on safety, for example by maximising range yet still retaining a suitable certifying energy reserve.

By way of a first example, aircraft commonly have a cabin Environmental Control System (ECS) for controlling conditions within the aircraft's cabin to ensure occupants (e.g. passengers) of the aircraft are comfortable. The ECS may, for example, include a cabin blower system, a heating system and an air conditioning system to ensure that the cabin pressure, temperature and humidity remain at a comfortable level.

In conventional large civil aircraft powered by gas turbines, the power draw of the ECS is large in absolute terms but relatively small compared to the power consumed to generate the thrust that propels the aircraft. Likewise, the total energy (integrated power draw) consumed by the ECS is small compared to the overall energy available to the aircraft by combustion of fuel in the gas turbines. In contrast, the power draw of the ECS of an electric or hybrid electric aircraft may represent a larger fraction of the total aircraft power draw, and the integrated ECS power draw may be a larger fraction of the overall stored energy.

Furthermore, whilst the ECS power draw required to fly a large civil aircraft at high altitude is large, it may not be particularly variable because e.g. the cabin is pressurized and the variation in weather conditions at 35,000ft may not significantly impact the power draw. In contrast, electric and hybrid electric aircraft may fly at lower altitudes: perhaps as high as 25,000ft for some turboprop applications, but altitudes less than 10,000ft or even less than 5,000ft may be used in some UAM applications. At lower altitudes the cabin may not be pressurized, and weather conditions such as temperature may be much more variable and highly dependent on geographical location, the time of the year and the time of the day. The ECS power draw may therefore limit the performance and range of electric and hybrid electric aircraft. This may be mitigated using the systems and methods described herein.

Furthermore, the power draw of the propulsion system of an electric or hybrid aircraft throughout flight may vary significantly depending on wind speed and gust conditions and turbulence. The effect may be particularly significant in VTOL aircraft where the propulsors may play a dual role of both propulsion and dynamic control. For example, a relatively high wind speed, turbulence or gust speed may significantly increase the power consumption during vertical take-off and the transition between vertical take-off and horizontal flight. Likewise, the propulsion system power draw associated with maintaining comfortable cruise conditions may be significant. The need to ensure there is sufficient energy to perform these manoeuvres and functions may limit the performance and range of electric and hybrid electric aircraft. This may be mitigated using the systems and methods described herein.

### Figure 2

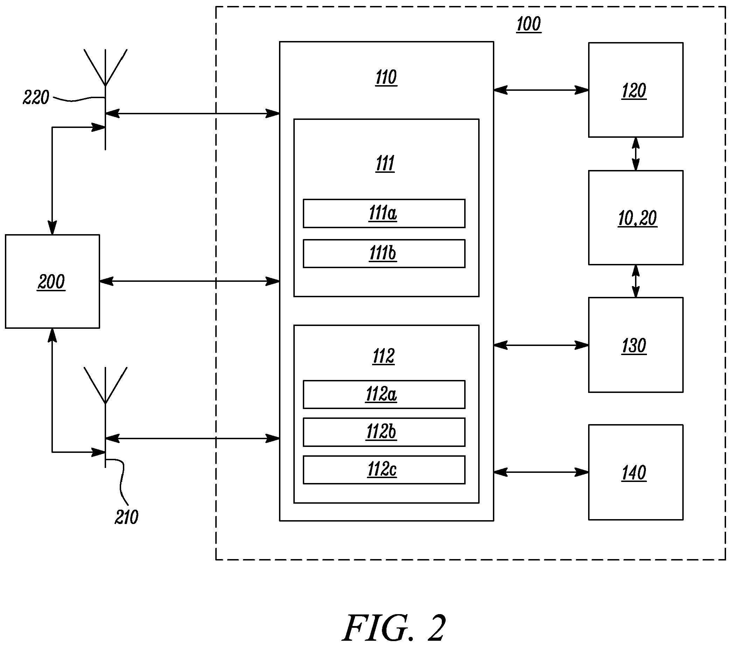

Figure 2 shows, in schematic form, an electric or hybrid electric aircraft 100 that is configured to implement the methods described herein. Also shown in Figure 2 are a computer system 200, another aircraft 210 and a weather satellite 220.

The aircraft 100 includes an electric or hybrid electric propulsion system 10, 20, as described above. In this embodiment the aircraft 100 is of VTOL configuration and the propulsion system 10, 20 performs the dual role of propulsion and dynamic control. In other examples the aircraft 100 could have a separate dynamic control system which may include, for example, control surfaces of a conventional type. The effectors of the propulsion system 10, 20 and the dynamic control system are controlled by a Flight Control System (FCS) 120, which is in communication with a Flight Management System (FMS) 110.

The FMS 110, which takes the form of a computer system, is responsible for the high level control of the aircraft 100. In particular, the FMS 110 is responsible for guiding the aircraft 100 along a pre-determined flight path from the flight origin to the flight destination by providing suitable control data to the FCS 120. The FMS 110 may, for example, include an autopilot system that receives navigation data via a satellite positioning system or inertial navigation system and provide appropriate control data to the FCS 120 based on the present location of the aircraft 100, the defined flight path and the flight control laws of the aircraft.

The aircraft 100 also includes an Environmental Control System (ECS) 130 which controls the environmental conditions within the cabin of the aircraft 100. The ECS 130 may include, for example, an electric cabin heater and an electric air conditioning system for controlling the temperature and humidity in the cabin. The arrows connecting the ECS 130 and the propulsion system 10, 20 in Figure 2 indicate that the ECS 130 may receive electrical power from the same power source as the propulsion system 10, 20, for example from the same batteries. It can also be seen that the ECS 130 is in communication with and under the control of the FMS 110, for example to select suitable environmental conditions and to constrain the power draw of the ECS 130.

The aircraft 100 also includes a weather information system 140 which provides the FMS 110 with weather data. The weather information system 140 may include a weather radar system, for example a Doppler weather radar system as is known in the art. The weather information system 140 may alternatively or additionally include sensors, for example temperature, pressure and humidity sensors, which provide sensor data to the FMS 110 in either a raw or processed form.

The FMS 110 may also receive weather information from one or more other sources. For example, the aircraft 100 may receive weather information from a weather satellite 220, either directly or via an intermediate system such as the computer system 200. The computer system 200 may be, or may include, a multi-aircraft management system such as an Air Traffic Management (ATM) system. The ATM system 200 may be in communication with the aircraft 100 by radio or other suitable means such as cellular communication or IEEE 802.11 wireless communication. Likewise, the aircraft 100 may receive weather information gathered by other aircraft 210, either directly from the other aircraft 210 or via an intermediate system such as the computer system 200.

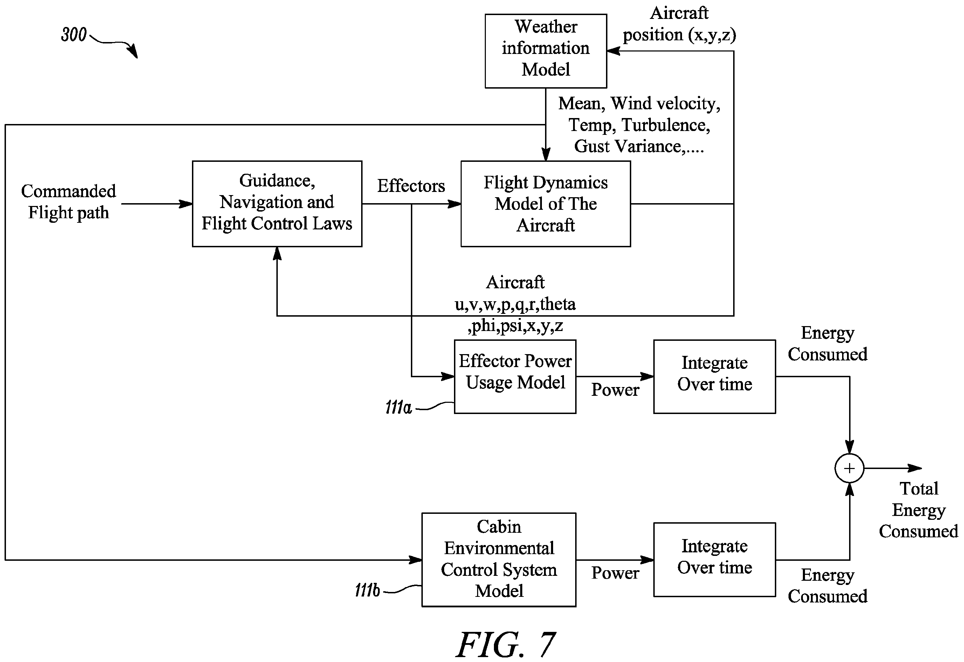

In accordance with some of the embodiments described herein, memory accessible to the FMS 110 stores a weather-dependent aircraft energy usage model 111. The aircraft energy usage model 111 receives inputs including weather data and outputs an estimated power draw of the aircraft's systems. In this embodiment, the model 111 includes two sub-models 111a, 111b which separately output the energy usage of the propulsion system 10, 20 and the ECS 130. An exemplary aircraft energy usage model 111 and its use will be described in more detail with reference to Figure 7.

Also in accordance with some of the embodiments described herein, memory accessible to the FMS 110 stores a plurality of different FMS profiles 112a, 112b, 112c (hereafter FMS profile 112). Each FMS profile 112 corresponds to a different set or range of weather conditions, and each FMS profile defines aircraft operating parameter constraints. In this embodiment, three different FMS profiles 112a, 112b, 112c are shown, but it will be appreciated that any number greater than or equal to two may be used. The operating parameter constraints may include any suitable combination of constraints, including but not limited to: a maximum power draw of the propulsion and/or dynamic control system 10, 20; a maximum power draw of the ECS 130; a maximum flight speed of the aircraft 100; and a maximum range of the aircraft in terms of distance and/or time.

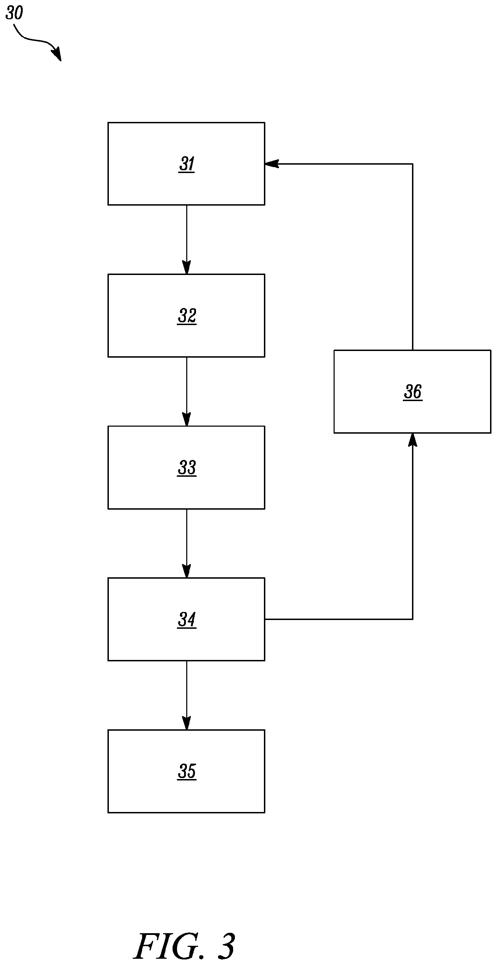

In some embodiments, described with reference to Figure 3, the FMS 110 uses the energy usage model 111 to validate a pre-determined flight path to ensure it is safe and suitable for use. In these embodiments, the FMS 110 uses the energy usage model 111 to estimate a weather-dependent amount of energy required by the aircraft's systems 10, 20, 120, 130 to fly the flight path, and accepts the flight path for use only if the required amount of energy is less than the available energy by at least a suitable margin (i.e. leaving a certifiable energy reserve).

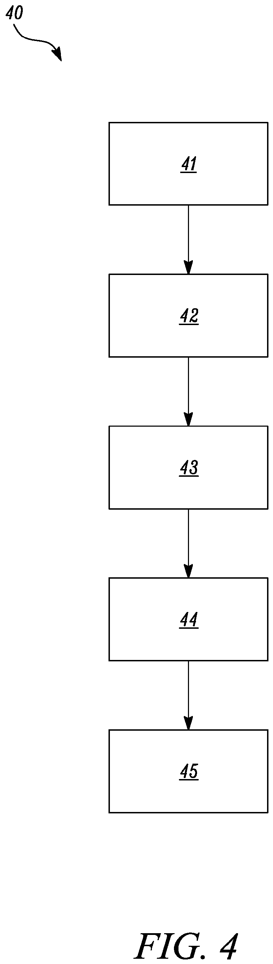

In other embodiments, described with reference to Figure 4, the FMS 110 uses the aircraft energy usage model 111 to determine a flight path. Specifically, the FMS 110 uses a constrained optimization method to determine a flight path between the origin and the destination that uses the minimum amount of energy, subject to constraints. The energy usage at each point or within each interval of the flight path is estimated using the weather-dependent energy usage model 111.

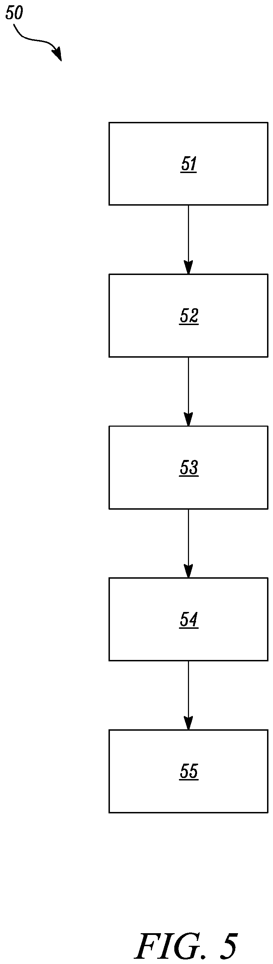

In still other embodiments, described with reference to Figure 5, the FMS 110 uses the aircraft energy usage model 111 to estimate a weather-dependent power draw of the ECS 130. Based on the estimated power draw of the ECS 130, the FMS may select or modify one or more operating parameters of the propulsion system 10, 20, for example to limit the maximum speed of the aircraft 100 and/or maximum power draw of the propulsion system.

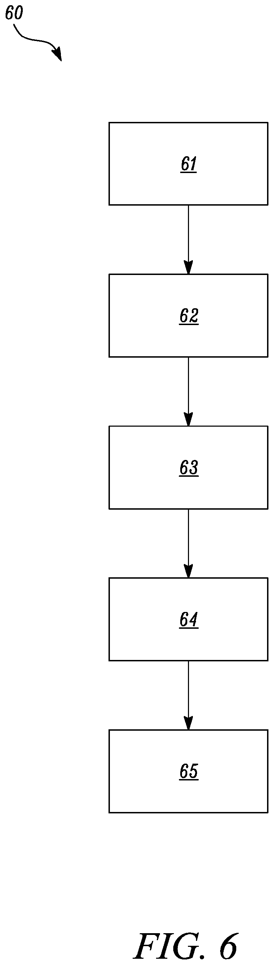

In further embodiments, described with reference to Figure 6, the FMS 110 selects one of the pre-defined FMS profiles 112a, 112b, 112c based on the received weather data, and controls the aircraft's systems 10, 20, 120, 130 in accordance with the constraints defined by the selected FMS profile. For example, the FMS 110 may limit the speed of the aircraft or limit the power draw of the propulsion system 10, 20 or the ECS 130 in accordance with limits defined by the selected FMS profile 112a, 112b, 112c. Additionally or alternatively, some or all of the constraints defined by the selected FMS profile 112a, 112b, 112c may be used as constraints in the constrained optimization method referred to above and in Figure 5.

It will be appreciated that whilst the FMS 110 may perform the methods described herein in their entirety, some or all of the processing may be performed by one or more external computer systems. For example, flight paths may be determined or validated by the computer system 200. This may be preferable where the processing capabilities of the FMS 110 are limited or where it is desirable to limit the amount of stored energy consumed by the aircraft 100 prior to flight.

It should be appreciated that some of the method steps of the methods 30, 40, 50, 60 described below may be omitted. Furthermore, it should be appreciated that unless the context clearly dictates otherwise, the order in which the steps are performed may be changed.

### Figure 3

Figure 3 illustrates a computer-implemented method 30 for determining a flight path for flying an energy-constrained aircraft, for example an electric or hybrid electric aircraft 100, from an origin to a destination. The method is implemented on a computer system, which in some embodiments is the FMS 110 of the aircraft 100. In other embodiments the computer system is or comprises an external computer system such as an ATM system 200.

The method 30 begins at 31, where the computer system obtains three-dimensional flight path data for flying the aircraft from the origin to the destination.

Where the method is performed by the FMS 110 of the aircraft 100, obtaining the flight path may involve receiving (e.g. downloading) the flight path data from an external computer system, for example a multi-aircraft management system such as an ATM system 200. Alternatively, the flight path may be entered into the FMS 110 by an operator via a computer interface of the FMS 110. In other embodiments, the computer system (e.g. the FMS 110) may determine the flight path itself using an input flight destination.

The three-dimensional flight path data typically includes three-dimensional aircraft position data (*x, y, z*) defining a three-dimensional path between the origin and destination. In some embodiments, the flight path data may also include three-dimensional aircraft velocity data (*u, v, w*) and/or acceleration; three-dimensional aircraft orientation data (*θ, ϕ, ψ*) and/or rates of change of orientation. Each variable of the flight path may be a time series, for example each value of each variable (e.g. *xᵢ, yᵢ, zᵢ, uᵢ, vᵢ, wᵢ, θᵢ, ϕᵢ, ψᵢ*) may be associated with an i-th time instant or time interval *tᵢ.*

At 32, the computer system receives weather data indicative of weather conditions along the flight path.

As described above, the weather data may be received from the aircraft's weather information system 140 (e.g. from a weather radar system or sensor arrangement), from the ATM system 200, from another aircraft 210 or from a weather satellite 220.

The weather data may include data indicative of any one or more of ambient temperature, pressure, humidity, average wind speed, wind direction, wind gust variance and an amount of turbulence. In some embodiments, the weather data defines one or more of these variables as a function of position (*x, y, z*) in a region that includes some or all of the flight path. In other embodiments, the weather data may more simply define minimum, maximum or average values of e.g. temperature and wind speed in a region that includes some or all of the flight path.

At 33, the computer system determines an estimated amount of energy required to fly the aircraft 100 from the origin to the destination along the flight path. The determination uses an aircraft energy usage model 111 whose inputs include the flight path data and the weather data.

The energy usage model 111 calculates an estimate of the amount of power drawn by the aircraft's systems at each time point (or a mean power draw within each short time interval *Δtᵢ*) as the aircraft traverses the three-dimensional path between the origin and destination. By summing or integrating the power draw over the entire flight path, an estimate of the total amount of energy used by the aircraft to fly the flight path is obtained.

The energy usage model 111 may determine a weather-dependent amount of energy required by the ECS 130 of the aircraft 100 in order to maintain the conditions in the cabin within a pre-defined envelope. For example, the ECS 130 may be required to keep the temperature within the cabin of the aircraft 100 within a pre-defined temperature range, for example 16°C to 22°C. The energy usage model 111 may calculate an approximate amount of energy required by the ECS 130 (e.g. by an electric heating system of the ECS 130) to maintain the temperature in this range, based in part on the weather data (e.g. the ambient temperature along the flight path). In some embodiments, the energy usage model 111 includes a sub-model 111b dedicated to modelling the power consumption of the ECS 130.

The energy usage model 111 may also determine a weather-dependent amount of energy consumed by the propulsion system 10, 20 and dynamic control system of the aircraft 100. For example, the energy usage model 111 may calculate an approximate amount of energy required to fly along the specified flight path, optionally at specified speeds, taking into account weather conditions such as wind speed and direction. This may include the energy consumption associated with performing take-off and landing manoeuvres, which as explained above may be particularly weather dependent in aircraft 100 of VTOL and STOL configuration. In some embodiments, the energy usage model 111 includes a sub-model 111a dedicated to modelling the power consumption of the propulsion system 10, 20 and, optionally, the dynamic control system.

Optionally, at 34, the computer system determines whether the estimated amount of energy required to fly the aircraft 100 along the flight path is greater than or less than and an amount of stored energy available to the aircraft 100 for the flight. For example, the computer system may compare the estimated amount of energy with a pre-determined amount of stored energy.

The computer system may first determine an amount of energy that is available for the flight, for example by determining a state of charge of a battery and, if relevant, determining a quantity of combustible fuel on board. In some embodiments, the computer system may take into account other parameters from a battery management system, for example a state of deterioration of the battery due to age and usage.

If the estimated amount of energy is less than the amount of stored energy available to the aircraft for the flight then, at 35, the computer system validates the flight path. Consequently, the aircraft 100 may be flown, possibly under the control of an autopilot system of the aircraft 100, from the origin to the destination using the validated flight path.

The amount of stored energy used in the comparison with the estimated energy consumption may be equal to the total amount of stored energy less a pre-defined reserve amount of energy (e.g. any reserve required by the certification or operation rules in force). In this way, the validation of the flight path is dependent on the mission being completed with a suitable energy reserve.

If the estimated amount of energy is greater than the amount of stored energy available to the aircraft for the flight then, at 36, the computer system rejects the flight path. In some embodiments, having rejected the flight path, the method 30 may return to step 31 where the computer system can attempt to obtain a new flight path for validation. In some embodiments, if the originally-obtained flight path is rejected at 36, the computer system may determine its own new flight path, for example using a weather-dependent constrained optimization method, as described in more detail below with reference to Figure 4.

### Figure 4

Figure 4 illustrates a computer-implemented method 40 for determining a flight path for flying an energy-constrained aircraft, for example an electric or hybrid electric aircraft 100, from an origin to a destination. The method is implemented on a computer system, which in some embodiments is the FMS 110 of the aircraft. In other embodiments, the computer system is or comprises an external computer system such as ATM system 200.

The method 40 begins at step 41, where the computer system receives weather data indicative of weather conditions between a flight origin and a flight destination of the aircraft 100. The content of the weather data and the manner in which the weather data is received by the computer system has been described above with reference to Figures 2 and 3 and for conciseness will not be repeated.

At 42, the computer system determines an amount of stored energy available to the aircraft 100 for flying from the origin to the destination. As described above with reference to step 34 of the method 30 of Figure 3, the computer system may determine an amount of energy stored in batteries, fuel cells and/or combustible fuel. In determining the amount of stored energy available for the flight, the computer system may exclude a reserve amount of energy.

At 43, the computer system determines an operating condition or a range of operating conditions at or in which an ECS 130 of the aircraft must maintain a cabin of the aircraft 100. The operating conditions may include, for example, a target temperature or temperature range, or a target humidity or humidity range. These required ECS operating conditions may be stored in memory accessible to the computer system, for example memory of the FMS 110.

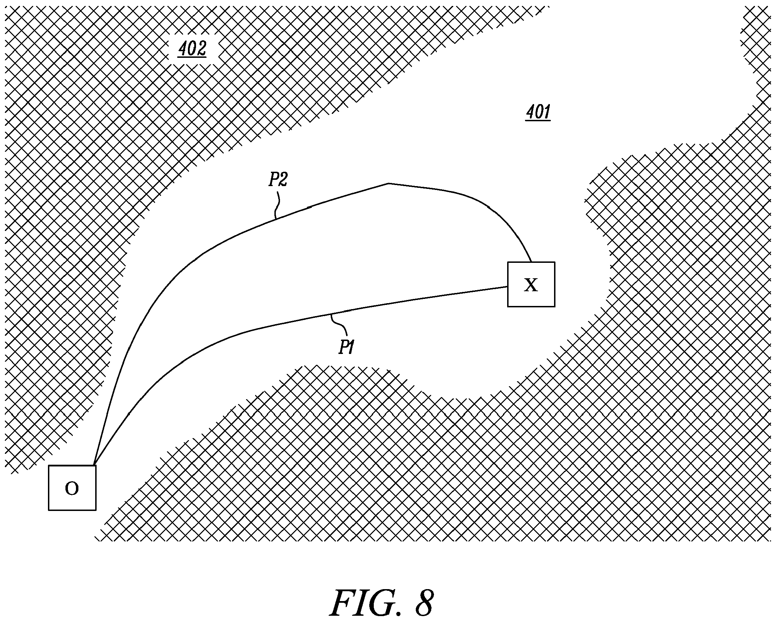

At 44, the computer system determines a flight corridor in which the aircraft must fly when flying from the flight origin to the flight destination. Briefly referring to Figure 8, when flying between an origin (O) and a destination (X), an aircraft may have to remain within a pre-defined flight corridor 401 and not stray into a region 402 outside of the flight corridor 401. The flight corridor 401 may, for example, avoid urban areas where noise must be kept low, areas reserved for other uses, and areas with elevated terrain. The computer system may receive (e.g. download) the flight corridor data, which may be two- or three-dimensional data, from an external computer system, for example the ATM system 200. Alternatively, flight corridor data may be stored in memory accessible to the FMS 110 of the aircraft.

Returning to Figure 4, at step 45 the computer system uses a constrained optimization method and a weather data dependent aircraft energy usage model 111 to determine a three-dimensional flight path from the origin to the destination. Various constrained optimization methods are known to those skilled in the art and may be used to implement step 45, for example non-linear constrained optimization methods such as interior-point methods.

As explained previously, and as will be discussed in more detail with reference to Figure 7, the aircraft energy usage model 111 produces an estimate of the aircraft's instantaneous power consumption based on an input set of instantaneous aircraft operating conditions (e.g. three-dimensional position, velocity and acceleration; orientation and rate of change of orientation; and ECS operating parameters such as cabin temperature) and instantaneous weather conditions (e.g. ambient temperature, wind speed and wind direction). The total energy consumption associated with a particular flight path is then found by integrating the instantaneous power consumption over the entire flight path. The constrained optimization method of step 45 works by determining a flight path (i.e. a time-series of instantaneous aircraft operating parameters) that minimizes the integrated instantaneous power consumptions as estimated by the aircraft energy usage model 111.

The computational complexity and the usefulness of the output of the constrained optimization are improved by subjecting the optimization to constraints. In accordance with the present disclosure, the computer system may use the range of operating conditions of the ECS, as determined in step 43 (e.g. a range of allowed cabin temperatures), as a constraint in the constrained optimization method. The computer system may also use the available stored energy determined in step 42 and the flight corridor data determined in step 44 as constraints in the optimization. Other suitable constraints, for example maximum values of parameters such as speed, orientation and rates of change of these quantities - may also be used or may be built into the aircraft energy usage model 111.

To further illustrate step 45 of the method 40 of Figure 4, Figure 8 shows - in a much simplified form - two possible flight paths P1, P2 from a flight origin (O) to a flight destination (X). As can be seen, both flight paths P1, P2 respect the flight corridor 401. The first path, P1, is a more direct route to the destination (X) than the second route, P2. However, taking into account the weather-dependency of the aircraft energy usage model 111, the constrained optimization method of step 45 may determine that path P2 minimizes the energy usage of the aircraft 100. For instance, the amount of energy required by the propulsion system 10, 20 and dynamic control system of the aircraft 100 to perform a landing manoeuvre may be very large when approaching the destination (X) along the flight path P1 due to the strength and direction of the wind. The constrained optimization method may instead determine that the different approach direction associated with flight path P2 significantly reduces the amount of energy associated with the landing manoeuvre and that this makes flight path P2 the optimal flight path.

If the constrained optimization method of step 45 is unable to determine a suitable flight path, for example if no flight path exists that satisfies the requirement that the total energy consumption is less than the available stored energy (less the reserve energy), the computer system may reject the proposed flight. If a suitable flight path is determined, the aircraft 100 may be flown, under the control of the FMS 110, along the determined flight path. Some or all of the steps 42-45 may be repeated during the course of the flight, for example at selected (e.g. pre-selected) sample instants of the flight path, to update the optimal path and take account of the current state of the aircraft and/or weather conditions. For example, a model predictive control algorithm of a type known in the art may be used one or more times during the flight path to update the optimal path.

It will be appreciated that steps 42, 43 and 44 of the method 40 are optional steps and need not be performed if the data determined in these steps is not used in step 45. It will also be appreciated that the order of steps 41-44 may be changed.

### Figure 5

Figure 5 illustrates a computer-implemented method 50 for controlling the operation of an energy-constrained aircraft, for example an electric or hybrid electric aircraft 100. The method is implemented on a computer system, which in some embodiments is the FMS 110 of the aircraft. In other embodiments, the computer system is or comprises an external computer system such as ATM system 200.

At 51, the computer system receives weather data indicative of weather conditions around the aircraft 100. The content of the weather data and the manner in which the weather data is received by the computer system has been described above with reference to Figures 2 and 3 and for conciseness will not be repeated.

Optionally, at 52, the computer system determines an operating condition or a range of operating conditions at or in which an ECS 130 of the aircraft 100 must maintain a cabin of the aircraft. The operating conditions may include, for example, a target temperature or temperature range, or a target humidity or humidity range. These required ECS operating conditions may be stored in memory accessible to the computer system, for example memory of the FMS 110.

At 53, the computer system determines an amount of electrical power required by the ECS 130 to maintain environmental conditions within a cabin of the aircraft 100 at or within the determined operating condition or range of operating conditions. The determination is based on the received weather data and an aircraft energy usage model 111 whose inputs include the weather data. For example, the aircraft energy usage model 111 may be or may include a model 111b that estimates an instantaneous power draw of the ECS 130 based on the input weather conditions (e.g. ambient temperature) and a required cabin environmental condition (e.g. a minimum or target cabin temperature).

At 54, the computer system selects or modifies one or more operating parameters of a propulsion system 10, 20 of the aircraft 100 based at least in part on the determined amount of electrical power required by the ECS 130. For example, in response to determining that the ECS power draw is above a threshold power draw, the computer system may select a relatively low value for the maximum speed for the aircraft or the maximum power draw of the propulsion system 10, 20. In some embodiments, the computer system may select one or more propulsion system operating parameters based on which one of a plurality of windows (each window defined by an upper and lower threshold) the determined ECS power draw falls into.

Optionally, at 55, the computer system operates the aircraft 100, including the propulsion system 10, 20, using the selected or modified operating parameters. In some embodiments, an autopilot system of the aircraft 100 flies the aircraft using the selected or modified operating parameters. One or more parameters may be updated during the flight based on updated weather data and/or updated ECS operating conditions.

It will be appreciated that step 52 of the method 50 is optional. In some embodiments the preferred operating conditions of the ECS 130 may be built into the energy usage model 111, and in this case step 52 may be redundant.

### Figure 6

Figure 6 illustrates a computer-implemented method 60 for controlling the operation of an energy-constrained aircraft, for example an electric or hybrid electric aircraft 100. The method is implemented on a computer system, which in some embodiments is the FMS 110 of the aircraft 100.

At 61, the computer system receives weather data indicative of weather conditions around the aircraft 100. The content of the weather data and the manner in which the weather data is received by the computer system has been described above with reference to Figures 2 and 3 and for conciseness will not be repeated.

Optionally, at 62, the computer system determines an amount of stored energy available to the aircraft 100 for flying from the origin to the destination. As described above with reference to step 34 of the method 30 of Figure 3, the computer system may determine an amount of energy stored in batteries, fuel cells and/or combustible fuel. In determining the amount of stored energy available for the flight, the computer system may exclude a reserve amount of energy.

At 63, the computer system selects, based on the received weather data, one of a plurality of different pre-defined FMS profiles 112a-c. Each FMS profile corresponds to a different range of weather conditions and defines a different set of aircraft operating parameters.

In some embodiments, each FMS profile 112 corresponds to a different range of temperatures, and the computer system selects the FMS profile 112 based on temperature data received in step 61. In other embodiments, each FMS profile 112 corresponds to a different range of wind speeds, and the computer system selects the FMS profile 112 based on wind speed data received in step 61. In still other embodiments, each FMS profile 112 is associated with multiple weather conditions, for example a particular range of temperatures and a particular range of wind speeds. Collectively, the FMS profiles 112 may cover all reasonable weather conditions. In some embodiments, if the weather conditions indicated by the received weather data do not correspond to any one of the FMS profiles 112, the computer system may determine that weather conditions are unsuitable for flight.

The set of aircraft operating parameters defined by each FMS profile 112 may include any set of aircraft parameters. Parameters may include, but are not limited to: one or more propulsion system settings such as a maximum speed or acceleration, a maximum power draw, or a cooling parameter of a cooling system that cools components of the propulsion system such as electrical machines; one or more ECS parameters such as a target cabin temperature, a target cabin humidity, or a maximum power draw; and/or one or more range parameters such as maximum range in terms of distance or time, or a maximum flight altitude.

The selection of the FMS profile 112 may further be based on the amount of energy available to aircraft for the flight, determined at step 62. For example, each FMS profile 112a-c may further specify a minimum amount of stored energy required for use of the FMS profile 112a-c.

Optionally, at 64, the computer system receives a flight destination for the aircraft 100 and determines, based at least in part on the selected FMS profile, whether or not the aircraft can fly to the flight destination. For example, the computer system may determine whether the set of aircraft operating parameters specified by the selected FMS profile 112 are consistent with a flight to the destination. For instance, the computer system may compare an approximate flight distance or flight time required for the flight to a maximum flight distance or flight time specified by the FMS profile 112.

At 65, responsive to determining that the aircraft 100 can fly to the flight destination, the computer system operates the aircraft 100 using operating parameters of the selected FMS profile 112. In some embodiments in which step 64 is omitted, the aircraft 100 may still be flown using operating parameters of the selected FMS profile 112. In some embodiments, a new FMS profile 112 may be selected during the course of a flight in response to new or updated weather data.

### Figure 7

Embodiments described above make use of a weather data dependent aircraft energy usage model 111 to estimate an aircraft's instantaneous power draw and/or total energy consumption. Figure 7 illustrates an aircraft digital twin which models an aircraft's operation and uses such an energy usage model 111. In this embodiment the aircraft energy usage model 111 is broken up into two parts: a first sub-model 111a for the propulsion and dynamic control system of an aircraft 100, and a second sub-model for the ECS 130 of the aircraft 100.

In more detail, the development of an aircraft may involve the development of a so-called "digital twin" of the aircraft. A digital twin, which may be based on the defined specifications of the aircraft, its control laws and the results of computer modelling and experimental testing, approximates how the aircraft and its systems will behave when subject to particular conditions and inputs. In the context of Figure 7, the combination of the flight control laws, the flight dynamics model, the effector power usage model 111a and the cabin ECS model 111b may be regarded as the digital twin of the aircraft 100. The effector power usage model 111a and the cabin ECS model 111b may be the result of computer modelling and experimental testing of the aircraft.

As can be seen from Figure 7, the effector power usage model 111a receives a set of inputs and outputs an estimated instantaneous power draw of the propulsion system 10, 20 and dynamic control system. Similarly, the cabin ECS model 111b receives a set of inputs and outputs an estimated instantaneous power draw of the ECS 130. These power outputs are integrated over time (for example over the entire time of a defined flight path) to give the energy consumed by the propulsion system 10, 20 and dynamic control system and by the cabin ECS 130. These are then summed to give the total energy consumption associated with the flight path.

Considering the inputs to the power usage models 111a, 111b in more detail, the cabin ECS model 111b receives time-dependent weather data (e.g. mean wind velocity, temperature, turbulence and gust variance) from a weather information model. The weather information model produces the time-dependent weather data by combining (e.g. temporally correlating) position-dependent weather data with the aircraft's time-dependent position (i.e. (*xᵢ, yᵢ, zᵢ*) for times *tᵢ*).

As explained above, the position-dependent weather data may be obtained via the aircraft's weather information system 140 or from an external system such as an ATM system 200 or weather satellite 220)

The time-dependent aircraft position data (*xᵢ, yᵢ, zᵢ*) is obtained starting from the input flight path (*x, y, z*)*,* represented in Figure 7 by the control loop input *"Commanded Flight Path".* The input flight path is provided to the pre-defined guidance, navigation and control (GNC) laws of the aircraft, which take the current state of the aircraft flight dynamic model (*uᵢ, vᵢ, wᵢ, pᵢ, qᵢ, rᵢ, θᵢ, ϕᵢ, ψᵢ*) and compute and output the required thrusts and effector values to track the desired trajectory.

It can be seen that the aircraft position data (*xᵢ, yᵢ, zᵢ*) is provided to the weather information model, which outputs an estimate of the time and location-dependent weather data to the pre-defined flight dynamics model of the aircraft 100 and also to the ECS energy usage model 111b. The flight dynamics model processes the weather-dependent information (wind speed, gust load, turbulence etc.) to produce weather-dependent flight dynamics data which is provided to the GNC laws. The output of the GNC laws is provided to the effector power model 111a.

It will therefore be understood that by starting with a pre-defined flight path (*"Commanded Flight Path"* in Figure 7) and weather data, both an instantaneous power draw and a total flight path energy consumption can be determined for the propulsion/dynamic control system 10, 20 and/or the cabin ECS 130. Furthermore, since the control loop 300 will estimate an instantaneous power draw associated with any set of input parameters, the output of the control loop 300 can be used as an input of a constrained optimization method which determines the optimal flight path for a given set of weather conditions and a given set of propulsion system and ECS constraints.

### Figure 8

Figure 8, which has been described above with respect to steps 43 and 45 of the method 40 of Figure 4, illustrates two flight paths, P1 and P2, from an origin (O) to a destination (X). Also illustrated are a permitted flight corridor 401 and a flight-restricted region 402.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

## Claims

1. A computer-implemented method (60) for controlling an electric or hybrid electric aircraft (100), the method comprising:
receiving (61), by a Flight Management System, FMS (110), of the aircraft, weather data indicative of weather conditions around the aircraft; and
selecting (63), by the FMS, based on the received weather data, one of a plurality of different pre-defined FMS profiles (112a-c), each FMS profile corresponding to a different range of weather conditions and defining a different set of aircraft operating parameters.

2. The computer-implemented method (60) of claim 1, in which the aircraft operating parameters of the FMS profiles (112a-c) include one or more of a maximum flight distance, a maximum flight time or a maximum flight energy consumption.

3. The computer-implemented method (60) of claim 1 or claim 2, in which the aircraft operating parameters of the FMS profiles (112a-c) include one or more of a maximum flight speed, a maximum rate of energy consumption of a propulsion system (10, 20) of the aircraft (100), an operating parameter of a cooling system for cooling one or more components of the propulsion system.

4. The computer-implemented method (60) of any one of the preceding claims, in which the aircraft (100) comprises an Environmental Control System, ECS (130), for controlling one or more environmental conditions within a cabin of the aircraft, and wherein each FMS profile (112a-c) defines an operating parameter of the ECS, for example a power consumption or allowable range of power consumptions for the ECS.

5. The computer-implemented method (60) of any one of the preceding claims, in which the received weather data comprises data indicative of ambient temperature and/or wind speed.

6. The computer-implemented method (60) of any one of the preceding claims, further comprising:
receiving (64) a flight destination; and
determining, based on the flight destination and the selected FMS profile (112a-c), whether or not the aircraft (100) can fly to the destination.

7. The computer-implemented method (60) of claim 6, further comprising:
determining an estimated distance or flight time between a current location of the aircraft (100) and the destination,
wherein determining (65) whether or not the aircraft can fly to the destination is based on the selected FMS profile (112a-c) and the estimated distance or flight time.

8. The computer-implemented method (60) of any one of the preceding claims, further comprising:
determining (62) an amount of stored energy available to the aircraft (100) for flying to a destination,
and wherein selecting (63) the FMS profile (112a-c) is based on the received weather data and on the determined amount of stored energy available to the aircraft.

9. The computer-implemented method (60) of claim 8, in which the amount of stored energy available to the aircraft (100) for flying to a destination is equal to a total amount of stored energy available to the aircraft less a reserve amount of energy.

10. The computer-implemented method (60) of claim 8 or claim 9, in which determining (62) the amount of stored energy available to the aircraft (100) comprises determining a state of charge of one or more batteries (11, 21) of the aircraft.

11. The computer-implemented method (60) of any one of the preceding claims, in which the weather data is received from one or more of: one or more sensors of the aircraft (100); a weather radar system of the aircraft; an Air Traffic Management, ATM, system (200); one or more other aircraft (210) in communication with the electric or hybrid electric aircraft (100); and a weather satellite (220).

12. A non-transitory computer-readable medium having program code stored thereon which, when executed by a computer system, causes the computer system to:
select, based on weather data indicative of weather conditions around an aircraft, one of a plurality of different pre-defined Flight Management System, FMS, profiles (112a-c), each FMS profile corresponding to a different range of weather conditions and defining a different set of aircraft operating parameters.

13. An electric or hybrid electric aircraft (100) comprising:
an electric or hybrid electric propulsion system (10, 20); and
a flight management system, FMS (110) defining a plurality of different FMS profiles (112a-c), each FMS profile corresponding to a different range of weather conditions and defining a different set of aircraft operating parameters.

14. The aircraft (100) of claim 17, further comprising an Environmental Control System, ECS (120), for controlling environmental conditions within a cabin of the aircraft, and wherein each FMS profile (112a-c) defines a power consumption or allowable range of power consumptions for the ECS.

15. The aircraft (100) of claim 17 or claim 18, being an aircraft of the Vertical Take-Off and Landing, VTOL, type.
